Europäisches Patentamt

European Patent Office

Office européen des brevets

(11) Veröffentlichungsnummer: **0 166 154**
A2

# (12) EUROPÄISCHE PATENTANMELDUNG

(21) Anmeldenummer: 85105858.6

(22) Anmeldetag: 13.05.85

(51) Int. Cl.⁴: **B 60 C 19/00, B 60 C 9/18**

(30) Priorität: 27.06.84 DE 3423705

(43) Veröffentlichungstag der Anmeldung: 02.01.86
Patentblatt 86/1

(84) Benannte Vertragsstaaten: **AT BE CH DE FR GB IT LI NL SE**

(71) Anmelder: **Messerschmitt-Bölkow-Blohm Gesellschaft mit beschränkter Haftung, Robert-Koch-Strasse, D-8012 Ottobrunn (DE)**

(72) Erfinder: **Bschorr, Oskar, Dr. Dipl.-Ing., Keplerstrasse 11, D-8000 München 80 (DE)**
Erfinder: **Wolf, Anton, Dipl.-Phys., Cramer-Klett-Strasse 24, D-8014 Neubiberg (DE)**

(54) Kompensation der Steifigkeitsdiskontinuitäten von Reifenprofilen.

(57) Die Erfindung bezieht sich auf ein Verfahren und Vorrichtungen zur Verringerung der Lärmabstrahlung und des Rollwiderstandes von Reifen. Gemäß der Erfindung werden die profilbedingten Steifigkeitsschwankungen im Reifen durch zusätzliche und/oder integrierte Kompensationsmittel mit entgegengesetzter Modulation der Biegesteifigkeit ausgeglichen.

# Kompensation der Steifigkeitsdiskontinuitäten von Reifenprofilen

Gegenstand der Erfindung ist ein Verfahren und eine Vorrichtung zum Ausgleich der durch die Reifenprofilierung hervorgerufenen Steifigkeitsschwankungen bei Autoreifen. Damit soll die Lärmabstrahlung von Reifen reduziert und der Rollwiderstand erniedrigt werden. Sekundär wird von einer solchen Maßnahme auch eine Erhöhung der Fahrsicherheit, der Fahrkomfort und der Lebensdauer erwartet.

Im Stadtverkehr bei 50 km-Tempo sind die Lärmanteile von Motor und Reifen ungefähr gleich. Auf Schnellstraßen, bei nasser und rauher Fahrbahn überwiegt jedoch der Reifenlärm. Der Reifenlärm beruht auf mehreren Entstehungsmechanismen. Körperschallabstrahlung, sog. Air--Pumping, aerodynamischer Lärm, Stollenschwingungen und bei extremen Fahrweisen das Reifenquietschen. Die mit einem Anteil von größenordnungsmäßig 70 % größte Lärmkomponente ist die Körperschallabstrahlung. Dieser Befund konnte gerade durch eigenen von einander unabhängige Messungen nachgewiesen werden. Dabei konnten drei Erregermechanismen ausgemacht werden. Der sinnfälligste Mechanismus beruht auf Straßenunebenheiten. Bei Abrollen prägen diese in die Reifenkarkasse eine Durchbiegung ein. Diese Störung wandert als Biegewelle über die Reifenkarkasse und strahlt damit sekundär Luftschall ab. Die Ausbreitungsgeschwindigkeit - die Biegewellengeschwindigkeit - konnte abhängig von Frequenz und Aus-

. . .

breitungsrichtung mit 50 - 150 m/s ermittelt werden. Außerdem zeigte sich, daß Unebenheiten von 0,3 mm die Lärmabstrahlung verdoppeln. Die beiden anderen Erregermechanismen können physikalisch/mathematisch in die Klasse der parametererregten Schwingungen eingereiht werden. Durch die Profilteilung ändert sich die lokale Biegesteifigkeit, sie ist im Bereich der Stollen höher als bei den Profileinschnitten. Beim Abrollen des Reifens tritt nun im Ein- und Auslauf eine umlaufende Verformung des Reifens auf. Die lokal wechselnde Biegesteifigkeit induziert daduch Biegewellen, die sich wieder über den Reifen ausbreiten und Luftschall ausbreiten.

Die Stollenteilung verursacht jedoch nicht nur Biegesteifigkeitsschwankungen, sondern auch Schwankungen der Federsteifigkeit. Auch bei Radlast verursacht unterschiedliche Federsteifigkeit, unterschiedliche Verformungen und dadurch wieder Biegewellen. Die beiden letzten Effekte sind die Ursache, daß ein profilierter, normaler Reifen ca. 10 dB lauter ist als ein Reifen ohne Profil. Neben der störenden Lärmabstrahlung der parameterbedingten Reifenschwingungen ist auch eine Energiebilanz wichtig. So macht die Energie der Reifenschwingungen bis zu 20 % des Rollwiderstandes aus.

Aufgabe der Erfindung ist es, die parametererregten Schwingungen der Reifenkarkasse auszuschalten, mit dem sich die Lärmabstrahlung und auch den Rollwiderstand von LKW-, PKW- und Zweiradreifen zu reduzieren.

...

Nach dem Hauptmerkmal der Erfindung wird die profilbedingte Inhomogenität der Biegesteifigkeit der Reifenkarkasse durch eine Kompensationssteifigkeit ausgeglichen. Dies kann in einfacher Weise durch zusätzlich am Reifen angebrachte Mittel mit entgegengesetzter Steifigkeitsinhomogenität erreicht werden. Derartige Mittel sind z.B. an der Innenseite oder im Gürtelzwischenraum eingebrachte Streifen oder Flächen aus Metall, Metallgewebe, Drahteinlagen, Gummi, Kunststoffe. Die Biegesteifigkeit kann damit über die Querschnittsfläche, die Höhe, Gewebe- und Drahtdichte und/oder den Elastizitätsmodul des Materials modifiziert werden. Eleganter ist es, die Kompensationsmittel direkt in die bestehenden Reifenkomponenten zu integrieren. Dazu können lokale Schwächungen und Verstärkungen von Biegesteifigkeiten in der Base-Schicht, in der Leinwand, in den Gürtellagen und/oder der Zwischenschicht angebracht werden. In der Base-Schicht z.B. kann das Gummimaterial an den Profileinschnitten nachträglich gehärtet werden; ein höherer lokaler Elastizitätsmodul erhöht die Biegesteifigkeit und kann so die Schwächung der Profileinschnitte wieder ausgleichen. Die Einlagerung von Faser- und Gewebeteilen hat dieselbe Wirkung. Wenn die eingelagerten Gewebeschichten nicht wie konventionell eine makroskopisch homogene Zugfestigkeit aufweisen, sondern eine inhomogene – der Stollenteilung angepaßte – kommt es ebenfalls zu einer Konstanthaltung der Biegesteifigkeit. Auch bei – im Vergleich zu Metallen – kleinen Elastizitätsmodul ergibt sich dank des großen Abstandes von der neutralen Linie ein großer Steifigkeitshub. Schließlich kann ebenfalls die Steifigkeit

...

9573 0166154

**MBB**

Patentabteilung

der Gürtellagen manipuliert werden. Bedingt durch das Herstellungsverfahren kommen dabei im wesentlichen nur nachträgliche Manipulationen in Frage, z.B. lokale Aufweitung bzw. Längung der Drahtlagen.

Nach einem weiteren Merkmal der Erfindung wird die durch die unerschiedliche Federsteifigkeit des profilierten Reifens verursachte Inhomogenität ausgeglichen. Dann werden dieselben Mittel wie bei der Kompensation von Biegesteifigkeiten benützt. Obwohl die Entstehungsmechanismen verschieden sind, sind beide kompatibel. Im folgenden sind Biegesteifigkeit und Federsteifigkeit unter dem Oberbegriff "Steifigkeit" zusammengefaßt.

Nach einem weiteren Merkmal der Erfindung werden lediglich die in Umfangsrichtung auftretenden Schwankungen der Biegesteifigkeit und der Federsteifigkeit der Reifenkarkasse ausgeglichen, nicht aber die in Querrichtung verlaufenden. Eine umlaufende Längsrille z.B. hat in Umfangsrichtung keine Steifigkeitsschwankungen und induziert keine von der umlaufenden Aufstandsverformung ausgehenden Biegeschwingungen.

Nach einem weiteren Merkmal der Erfindung werden am Reifen, z.B. an der Innenseite, Masseninhomogenitäten angebracht. Infolge der Fliehkraft induzieren diese Biegeschwingungen in der Reifenkarkasse. Die Masseninhomogenitäten mit derselben Teilung wie beim Profil und in Gegenphase angebracht ergeben dank der destruktiven Interferenz eine Neutralisation der Schwingungen.

. . .

**MBB**

Patentabteilung

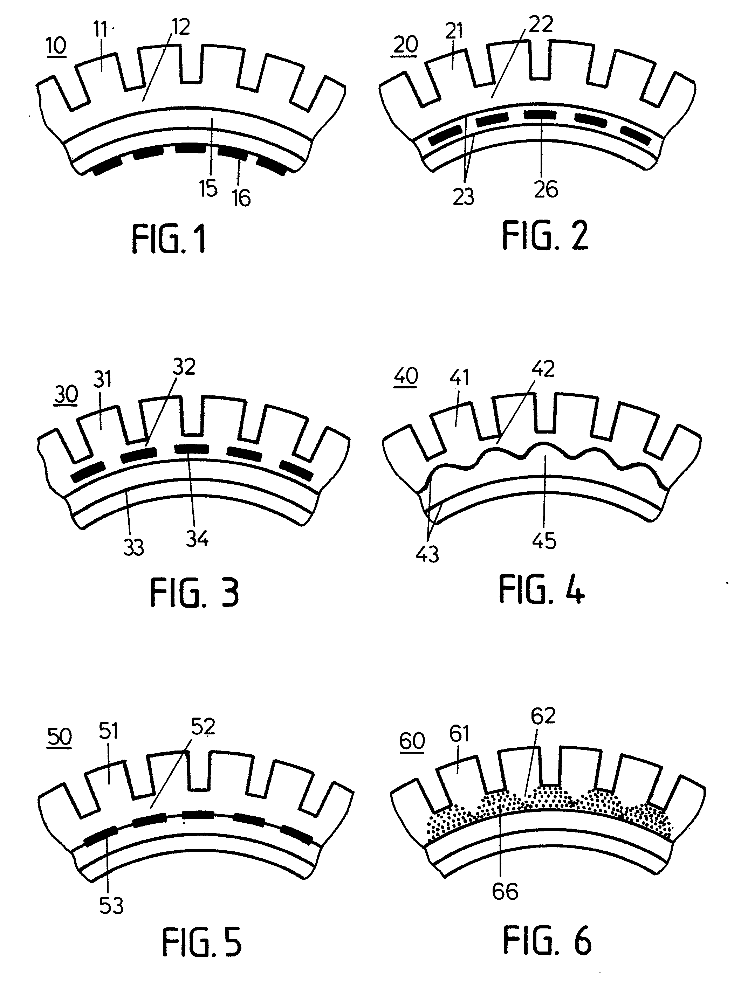

Der Erfindungsgegenstand ist anhand mehrerer Ausführungsbeispiele beschrieben. Die Figuren 1 bis 6 zeigen jeweils einen Querschnitt durch die Reifenkarkasse in Umfangsrichtung. Die Fig. 1 und 2 haben eingebrachte Zusatzmittel zur Kompensation von Biegesteifigkeit- und Federsteifigkeitsschwankungen. Bei den Fig. 5 und 6 handelt es sich um integrierte Mittel. Die Ausführungen nach den Fig. 3 und 4 schließlich können sowohl als Zusatz- und /oder Integrationsmittel angesprochen werden. In allen Figuren wurden folgende durchgehenden Bezeichnungen gewählt:

10, 20 ... 60   Reifen
11, 21 ... 61   Reifenprofil
12, 22 ... 62   Base-Schicht
13, 23 ... 63   Gürtelschicht (weggelassen)
14, 24 ... 64   Leinwandschicht
15, 25 ... 65   Gürtelzwischenlage
16, 26 ... 66   Steifigkeitskompensator.

In Fig. 1 ist auf der Reifeninnenseite in in Umfangsrichtung ein steifigkeitsmodulierter Streifen 16 angebracht. Der Streifen 16 besteht aus Gewebe, Metall, Draht und/oder Gummi. Die Steifigkeitsänderung erfolgt durch den Querschnitt, die Höhe, die Gewebedichte und/oder Elastizitätsmodul und ist entgegengesetzt zur Steifigkeitsschwankung des Reifens 10. Analog dazu ist in Fig. 2 der Steifigkeitskompensator 26 zwischen den Gürtellagen 23 angeordnet. Dazu kann z.B. ein entsprechend modulierter Dreiecksgürtel herangezogen werden.

...

**MBB**

In den Fig. 3, 4 und 5 ist die Kompensation von profilbedingten Steifigkeitsschwankungen der Reifen 30, 40
und 50 an der sowieso vorhandenen Gewebeeinlage 34,
Gürtelzwischenlage 45 bzw. Gürtelschicht 43 vorgenommen. Wie eingangs bereits ausgeführt erhalten Gewebelage 34, Gürtelzwischenlage 45 bzw. Gürtelschicht 53 lokal unterschiedliche Biegesteifigkeit, so daß die profilbedingten Steifigkeitsschwankungen kompensiert sind.
In einem derart abgeglichenen Reifen können so keine
parametererregten Schwingungen entstehen, so daß Lärmabstrahlung und Rollwiderstand herabgesetzt sind.

In Fig. 6 schließlich ist die profilbedingte Steifigkeitsschwankung des Reifens 60 durch unterschiediche
Elastizitätsmodule der Base-Schicht 62 erreicht. Derartige lokale Änderungen können durch lokale Strahlungs-
- und/oder Wärmeeinwirkung erreicht werden. Dieses Verfahren eignet sich zu nachträglichen Korrekturen, falls
die Steifigkeitsschwankungen nicht exakt angeglichen
sind. Als Korrekturgröße für eine solche Nachjustierung
kann gerade das emittierte Schallsignal herangezogen
werden. Insbesondere bietet die Spektralanalyse gerade
auch die lokale spektrale Korrektur nach Betrag und
Phase.

Um die Herstellung und Justierung des steifigkeitsausgleichenden Kompensationsmittels zu erleichtern ist es
zweckmäßig, Reifen mit äquidistante Profilteilen zu
verwenden. Damit erhält auch das Kompensationsmittel
äquidistantes Steifigkeitsmuster.

...

## Kompensation der Steifigkeitsdiskontinuitäten
## von Reifenprofilen

Patentansprüche

1. Verfahren und Vorrichtung zur Verringerung der Lärmabstrahlung und des Rollwiderstandes von Reifen, dadurch g e k e n n z e i c h n e t , daß die profilbedingten Steifigkeitsschwankungen im Reifen durch zusätzliche und/oder intergrierte Kompensationsmittel mit entgegengesetzter Modulation der Biegesteifigkeit ausgeglichen wird.

2. Verfahren und Vorrichtung nach Anspruch 1, dadurch g e k e n n z e i c h n e t , daß als zusätzliche Kompensationsmittel streifen- oder flächenförmige Einlagen aus Metall, Metall-, Textil- oder Fasergewebe, Drahteinlagen, Gummi oder Kuntstoff bestehen und an der Reifeninnenseite und/oder in der Gürtelzwischenschicht angebracht sind.

...

3. Verfahren und Vorrichtung nach Anspruch 1, dadurch g e k e n n z e i c h n e t , daß als integrierte Kompensationsmittel zum Ausgleich von profilbedingten Steifigkeitsschwankungen die Base-Schicht, die Leinwand, und/oder die Gürtelschichten lokal unterschiedliche Biegesteifigkeit durch Erhöhung/Erniedrigung des Elastizitätsmoduls, der Gewebedichte, der Drahtabstände, und/oder auch lokale Drahtlängung erhält.

4. Verfahren und Vorrichtung nach den Ansprüchen 1 - 3, dadurch g e k e n n z e i c h n e t , daß lediglich die profilbedingten Steifigkeitsschwankungen in Umfangsrichtung kompensiert werden, nicht aber die bezüglich der Parametererregung inaktiven Steifigkeitsunterschiede in Querrichtung.

...

FIG. 1

FIG. 2

FIG. 3

FIG. 4

FIG. 5

FIG. 6

0166154

9573